# EUROPEAN PATENT APPLICATION

(11) **EP 3 928 624 A1**
(43) Date of publication of application: **29.12.2021**
(21) Application number: 21180732.6
(22) Date of filing: 22.06.2021
(51) Int. Cl.: A23B 7/005, A23B 7/045, A23B 7/10, A23L 17/60

(54) **METHOD FOR MAKING AND STORING AN ORGANIC PRODUCT**

(30) Priority: 22.06.2020 IT 202000014833
(71) Applicant: FOOD SOLUTIONS di Filiaggi Alessandro & C S.a.s, 63074 San Benedetto del Tronto (AP) (IT)
(72) Inventor: Filiaggi, Alessandro, San Benedetto del Tronto (AP) (IT); Filiaggi, Nicola, San Benedetto del Tronto (AP) (IT)
(74) Representative: Laghi, Alberto

(57) **Abstract**

Method for the realization and conservation of a seaweed-based biological product for food use, comprising the following operating steps:
- prepare a predetermined quantity of frozen seaweed and subject said quantity of frozen seaweed to a thawing out treatment and subsequent separation of said seaweed;
- carry out the dosage of said seaweed inside suitable container jar;
- add inside said container jar containing seaweed mixed an acidifying substance;
- carry out the hermetical seal of said jar; and
- subject said jar to a pasteurization treatment.

## Description

"Method for the realization and conservation of a biological seaweed-based product for the use in the food field"

The invention herein relates to a method for the realization of a biological product.

Especially, the invention herein being advantageously employed to realize and effectively conserve a biological seaweed-based product used in the food field, the following description will explicitly refer to it without losing for this reason the generality, that is of organisms with a vegetable structure, autotrophic unicellular or pluricellular coming from salt water. The use of edible seaweeds has long been known, especially salt water, being used in the realization of biological foods, e.g. in dried form to be crumbled into soups, salads or the like, or to produce flours being used in the production of baked products, such as bread, pizza and equivalent derivatives.

One of the greatest problems connected to the use of the seaweed in the realization of food products is the identification of the correct type of seaweed to use, it is not always easy due to the huge variety of species available in nature to realize a correct and effective edible biological product, with a pleasant flavour and with an optimal nutritional content.

Besides, it is necessary that the product for food use realized in this way is effectively conservable over time in a safe and healthy way.

The aim of the present invention is therefore to provide an effective method able to realize a seaweed-based biological product for food use provided with the suitable and safe editability and conservation level, with a pleasant flavour and correct nutritional contents, used for example in balanced diets, supplements treatments and similar treatments.

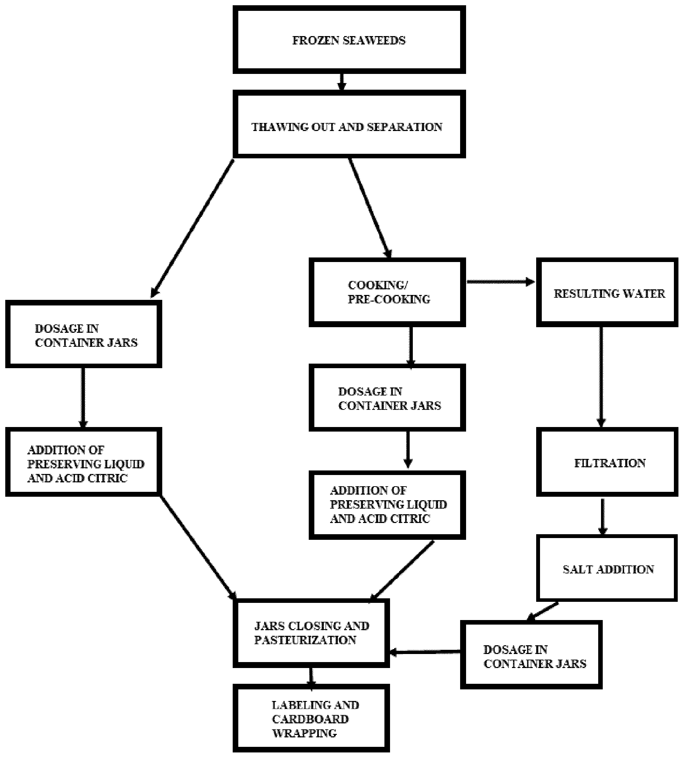

The structural and functional characteristics of the present invention and its advantages regarding the known prior art will be clearer and more evident from the claims below, and especially from an examination of the following description, referred to the attached figure, that shows some variants of a preferred, but not limiting, schematic embodiment in a block diagram of the method referred herein.

With reference to the block diagram of the attached figure, especially the left part of the same block diagram, the method for the realization and the conservation of a seaweed-base biological product object of the invention herein substantially and preferably provides the following operating steps:
- prepare a predetermined quantity of frozen seaweeds and subject said quantity of frozen seaweeds to a thawing out treatment and subsequent separation of the same seaweeds;
- carry out the dosage of said seaweeds inside suitable container jars, preferably glass jars or similar materials;
- add preserving liquid (water) inside said container jars containing minced seaweeds mixed with an acidifying substance;
- carry out the hermetical seal of said container jars and subject said container jars to a final pasteurization treatment for a prefixed time to allow an effective and safe conservation, keeping a safe edibility, a pleasant flavour, and correct nutritional contents.

The labelling of the container jars treated with pasteurization and their next packaging by means of the introduction in cardboard boxes (cardboard wrapping) terminates the method herein allowing an effective marketing and sale.

According to an alternative variant of the method herein, shown in the block diagram of the attached figure (central section of the same block diagram), the said dosing step being preceded by a cooking step in water for a determined time of the thawed out and minced seaweeds.

Preferably according to a further variant, shown in the block diagram of the attached figure (right section of the same block diagram), the said liquid of cooking water, provided with great smells and tastes, then being filtered, next contingently treated with an addition of salt, then dosed and packed into container jars, that are finally being tight sealed and subjected to a pasteurization step, such that said liquid may be advantageously used to unmistakably flavour and/or season pasta, bread or other equivalent food product.

Preferably the seaweeds being advantageously used are defined by *Ulva Lactuca* or *Gracilaria.*

Preferably the mentioned acidifying substance, mixed with the preserving liquid, in which the above-mentioned seaweeds of the species *Ulva Lactuca* or *Gracilaria* are being dipped, is defined by citric acid (C₆H₈0₇) or similar derived substance, as such lemon juice or equivalent.

## Claims

1. Method for realization and conservation of a biological seaweed-based product for use in food field, **characterized by** the fact of comprising the following operating phases:
- preparing a predetermined quantity of seaweed in frozen form and subjecting said quantity of frozen seaweed to a thawing treatment and subsequent separation of said seaweeds;
- carry out the dosage of said seaweeds inside a container;
- add water mixed with an acidifying substance inside said container containing said seaweeds;
- hermetically seal said container; and
- subjecting said container to a pasteurization treatment.

2. Method according to claim 1, **characterized in that** said seaweed comprises Ulva Lactuca.

3. Method according to claim 1, **characterized in that** said seaweed comprises Gracilaria.

4. Method according to one or more claims 1 to 3, **characterized in that** said dosing step of said seaweed is preceded by a step of cooking in water said seaweed.

5. Method according to claim 4, **characterized in that** said cooking step comprises further step of filtering said cooking water and packaging said cooking water in containers; said containers being tight sealed and subjected to a pasteurization step.

6. Method according to one or more claims 1 to 5, **characterized in that** said acidifying substance comprises citric acid.

7. Method according to one or more claims 1 to 5, **characterized in that** said acidifying substance comprises lemon juice.

8. Method according to one or more of claims 1 to 7, **characterized in that** it comprises the further labeling step of said container and the subsequent step of packing said labeled container into a cardboard box.
